# FASCICULE DE BREVET EUROPEEN

(11) **EP 2 477 752 B1**
(45) Date de publication et mention de la délivrance du brevet: **17.12.2014**
(21) Numéro de dépôt: 10770849.7
(22) Date de dépôt: 14.09.2010
(51) Int. Cl.: B05B 12/08, G05D 16/06

(54) **DISPOSITIF DE PULVERISATION DE PEINTURE**
FARBSPRÜHVORRICHTUNG MIT REGULIERUNGSFUNKTION
REGULATING AND SPRAYING PAINT DEVICE

(30) Priorité: 14.09.2009 FR 0956291
(43) Date de publication de la demande: 25.07.2012
(73) Titulaire: Air Et Pulverisation, 33110 Le Bouscat (FR)
(72) Inventeur: TERRIER, Alain, F-33110 Le Bouscat (FR)
(74) Mandataire: Fantin, Laurent
(86) Numéro de dépôt international: PCT/FR2010/051905
(87) Numéro de publication internationale: WO 2011/030080

(56) Documents cités:
- EP-A- 2 065 100
- WO-A-89/10796
- FR-A- 2 552 345
- GB-A- 2 278 906

## Description

La présente invention concerne un dispositif de pulvérisation d'un produit à base de peinture à une pression donnée dite de sortie.

Généralement, un dispositif connu de pulvérisation d'un produit à base de peinture se présente de la forme d'un pistolet, muni d'une sortie du produit à base de peinture hors du dispositif de pulvérisation à une pression de sortie et d'une entrée de la peinture dans le dispositif de pulvérisation à une pression d'entrée supérieure à la pression de sortie. La peinture est injectée à l'entrée du pistolet par l'intermédiaire d'un tuyau flexible alimenté par une pompe sous pression.

Pour une application de peinture sur une surface réduite, il est connu d'utiliser des pressions d'entrée et de sortie élevées, de l'ordre de 60 bars à 250 bars, la pression de sortie étant contrôlée par une gâchette du pistolet qu'un opérateur manipule.

Toutefois, un tel dispositif n'est absolument pas adapté à une application plus délicate pour laquelle une grande qualité de finition est recherchée et la couche de peinture obtenue doit être la plus homogène possible. C'est en particulier le cas pour le recouvrement par peinture d'une carlingue d'aéronef.

Parce que l'application ne peut se faire que manuellement et que la finition exigée est très élevée, les pistolets utilisés sont basés sur la technique de pulvérisation pneumatique, avec parfois l'apport d'effet électrostatique.

Il est connu d'utiliser des pressions d'entrée et de sortie basses, de l'ordre de 1 à 4 bars.

Toutefois, pour peindre des objets de grandes dimensions ou éloignés de la pompe, le tuyau flexible d'alimentation du dispositif de pulvérisation est de diamètre élevé, de l'ordre de 10 mm, la longueur du tuyau flexible pouvant atteindre 5 m à 45 m. Ainsi, quand la surface est peinte, la grande quantité de peinture stockée dans le tuyau doit être évacuée par lavage à l'aide d'un solvant. Un tel dispositif connu présente donc l'inconvénient qu'une grande quantité de peinture est perdue et qu'une grande quantité de solvant, souvent toxique, est nécessaire au lavage. De plus, le diamètre élevé du tuyau implique qu'un opérateur chargé de peindre une surface donnée doit soulever un poids important, par exemple de l'ordre d'une dizaine de kilogrammes, engendrant des risques de tendinites aux épaules de l'opérateur.

Afin de remédier à ces inconvénients, on pourrait envisager d'utiliser un tuyau d'alimentation avec un faible diamètre, dans lequel circule la peinture avec une pression élevée et un pistolet intégrant un réducteur de pression permettant de réduire fortement la pression à l'entrée du pistolet de manière à obtenir en sortie du pistolet une basse pression.

Le document WO 89/10796 décrit un dispositif d'autorégulation et de réduction de pression selon le préambule de la revendication 1.

Le document FR-2.552.345 propose un régulateur de pression qui permet de moduler la pression à l'entrée du pistolet.

Selon ce document, le régulateur comprend une membrane séparant deux chambres dont une première chambre est alimentée d'air de pilotage, la seconde chambre étant reliée via un conduit au pistolet. Cette seconde chambre est alimentée en peinture via une vanne comportant un orifice délimité par un siège contre lequel peut prendre appui un élément d'obturation relié à la membrane par une tige. Selon ce document, l'élément d'obturation est disposé à l'opposé de la membrane par rapport à l'orifice si bien que la tige traverse ledit orifice.

Ce type de dispositif de régulation ne permet pas une réduction optimale de la pression.

Aussi, la présente invention vise à proposer un dispositif de réduction de pression pour un appareil de pulvérisation d'un produit à base de peinture, léger, de conception simple, permettant de réduire de manière optimale la pression.

A cet effet, l'invention a pour objet un dispositif d'auto-régulation et de réduction d'une pression de sortie à partir d'une pression d'entrée, destiné à équiper un dispositif de pulvérisation de peinture, comportant des moyens d'équilibrage de la pression de sortie à une pression de pilotage et un clapet permettant de réguler et réduire la pression d'entrée commandé par lesdits moyens d'équilibrage, de sorte à limiter la pression de sortie en la maintenant sensiblement constante de façon autonome, ledit clapet comportant un orifice de passage plus ou moins obturé par un élément obturateur relié par une tige aux moyens d'équilibrage, caractérisé en ce que la tige reliant les moyens d'équilibrage et l'élément obturateur ne traverse pas l'orifice de passage, lesdits moyens d'équilibrage et l'élément obturateur étant disposés du même côté par rapport à l'orifice de passage.

L'invention concerne également un dispositif de pulvérisation d'un produit à base de peinture intégrant ledit dispositif de réduction de la pression.

L'invention sera décrite maintenant plus en détail en référence aux figures annexées données uniquement à titre d'exemple et dans lesquelles :
- la figure 1 est une représentation schématique d'un dispositif de pulvérisation selon la présente invention alimenté en peinture, en air de pulvérisation et en air de pilotage,
- la figure 2 est une représentation schématique en coupe longitudinale du détail II du dispositif de la figure 1 selon une première variante,
- la figure 3 est une représentation schématique en coupe longitudinale du détail II du dispositif de la figure 1 selon une autre variante,
- la figure 4A est une coupe d'un premier mode de réalisation de la seconde variante,
- la figure 4B est une coupe d'un deuxième mode de réalisation de la seconde variante,
- la figure 5 est une vue en perspective de l'élément d'obturation du dispositif illustré sur la figure 4B, et
- la figure 6 est une coupe de l'élément d'obturation illustré sur la figure 5.

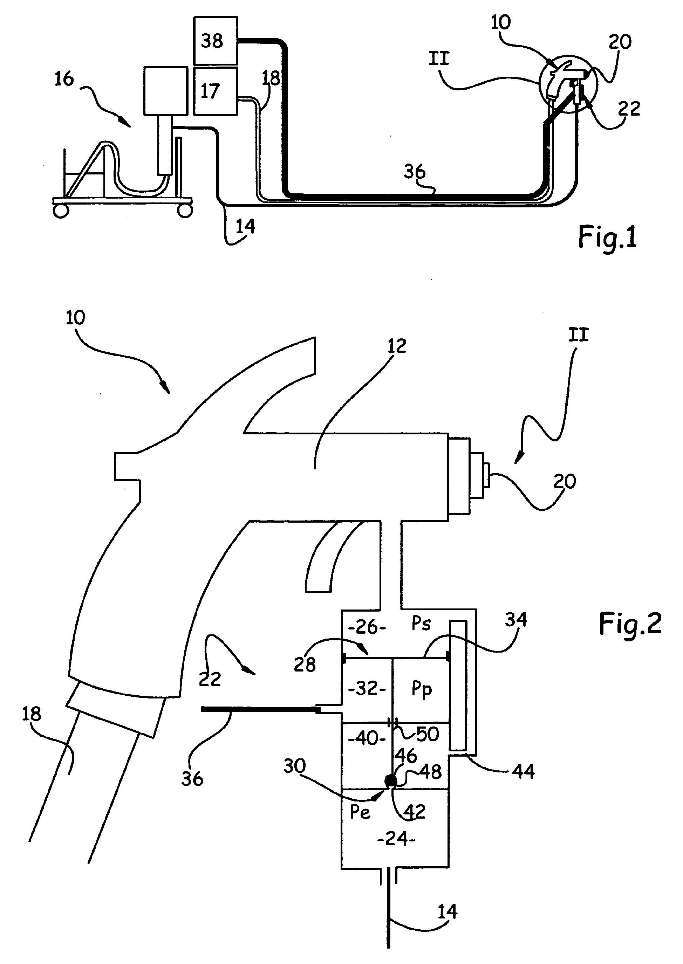

Sur les figures 1 et 2, on a représenté un dispositif de pulvérisation, référencé en 10 et destiné à pulvériser sur une surface de travail un produit à base de peinture à une pression donnée dite de sortie, notée Ps.

Comme visible aux figures 1 et 2, le dispositif 10 comprend une tête de pulvérisation 12 de la forme d'un pistolet, ce qui confère une grande maniabilité au dispositif 10. Le pistolet 12 est alimenté par un tuyau flexible 14 alimenté par une pompe 16, qui ne sera pas plus décrite car connue de l'homme du métier. La pression de la peinture en entrée du dispositif 10 est notée Pe. La peinture est mélangée à de l'air comprimé de pulvérisation alimentant le pistolet 12 par une pompe 17 via un tuyau flexible 18 avant d'être pulvérisée hors du dispositif 10 par une sortie 20. Par produit à base de peinture, on entend la peinture qui a été mélangée à l'air de pulvérisation.

Selon la présente invention, le dispositif de pulvérisation 10 comprend un dispositif d'autorégulation et de réduction 22 de la pression de sortie Ps à partir de la pression d'entrée Pe, la pression de sortie Ps étant relativement faible alors que la pression d'entrée Pe est supérieure à la pression de sortie Ps.

Comme visible à la figure 2, le dispositif 22 d'autorégulation et de réduction de la pression sont munis de moyens 28 d'équilibrage de la pression de sortie Ps à une pression de pilotage Pp, ainsi qu'un clapet 30 commandé par les moyens d'équilibrage 28, de sorte que le dispositif de pulvérisation 10 limite la pression de sortie Ps et la maintient sensiblement constante de façon autonome, c'est-à-dire sans aucune intervention extérieure.

Pour donner un ordre de grandeur, la pression de sortie Ps est comprise avantageusement entre 0,3 et 4 bars, et préférentiellement de l'ordre de 0,5 bars, tandis que la pression d'entrée Pe est avantageusement comprise entre 30 bars et 300 bars.

Comme visible sur la figure 2, le dispositif d'autorégulation et de réduction de la pression 22 comprend un compartiment d'entrée 24 de la peinture ainsi qu'un compartiment de sortie 26 de la peinture.

Comme représenté à la figure 2, le dispositif d'autorégulation et de réduction de la pression 22 comprend également un compartiment de pilotage 32 susceptible d'être rempli de fluide de pilotage à la pression de pilotage Pp, le compartiment de pilotage 32 étant séparé du compartiment de sortie 26 par les moyens d'équilibrage 28.

Selon une variante illustrée sur la figure 2, les moyens d'équilibrage 28 se présentent sous la forme d'un piston 34 apte à se déplacer dans un sens de réduction du volume du compartiment de pilotage 32 quand la pression de sortie Ps est supérieure à la pression de pilotage Pp et dans un sens d'augmentation du volume du compartiment de pilotage 32 quand la pression de sortie Ps est inférieure à la pression de pilotage Pp.

Sur la figure 2, le sens d'augmentation du volume du compartiment de pilotage 32 correspond à un déplacement vers le haut du piston 34, tandis que le sens de réduction du volume du compartiment de pilotage 32 correspond à un déplacement vers le bas du piston 34.

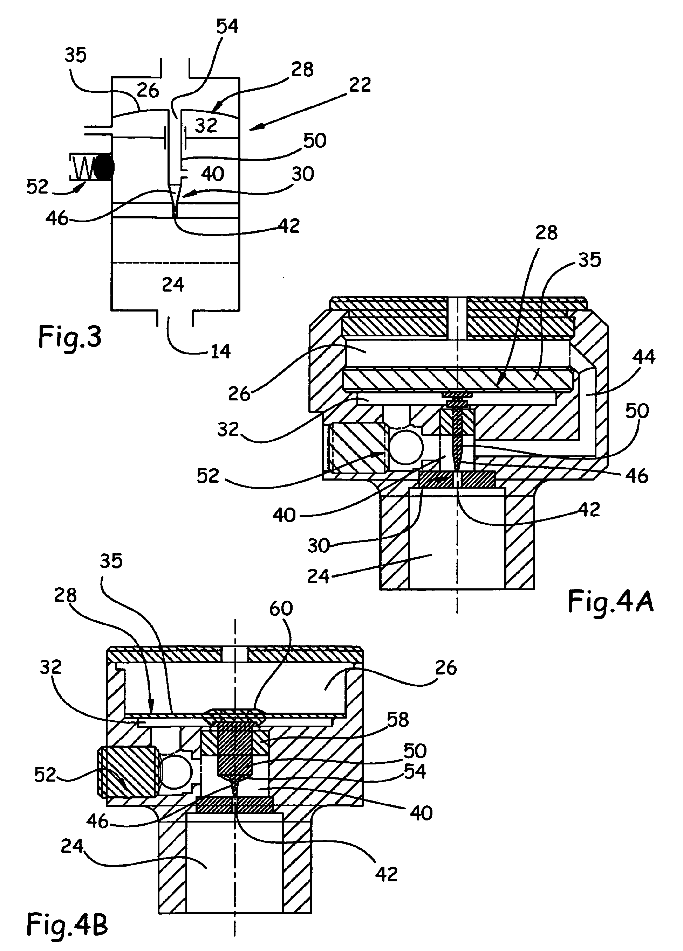

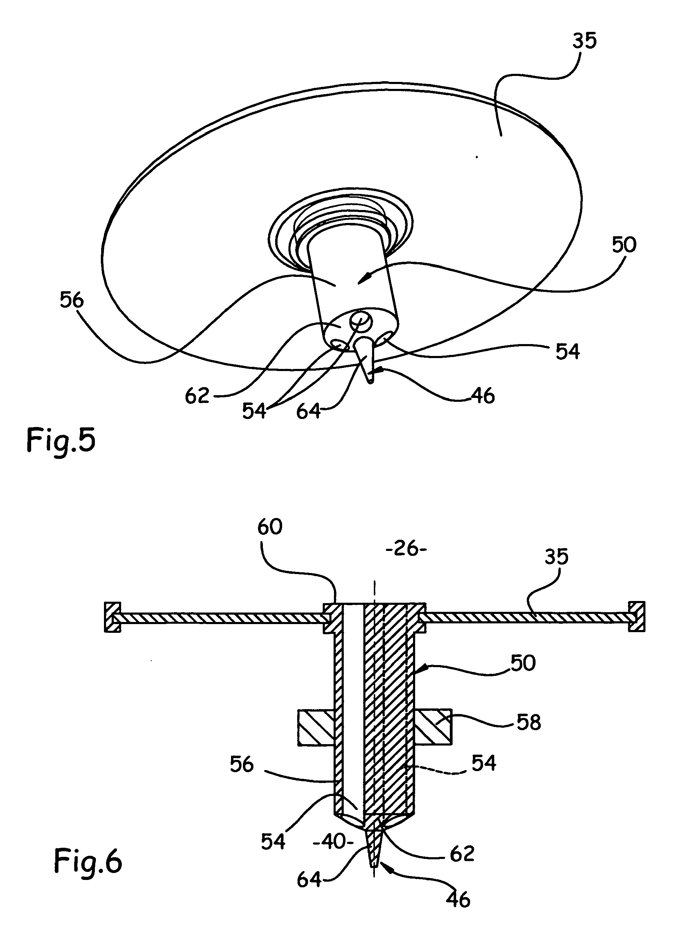

Selon une autre variante illustrée sur les figures 3, 4A, 4B, 5 et 6, les moyens d'équilibrage 28 se présentent sous la forme d'une membrane 35 en forme de disque dont la périphérie est fixe par rapport à la paroi délimitant les compartiments 26 et 32 et dont la partie centrale peut se déformer dans un sens de réduction du volume du compartiment de pilotage 32 quand la pression de sortie Ps est supérieure à la pression de pilotage Pp et dans un sens d'augmentation du volume du compartiment de pilotage 32 quand la pression de sortie Ps est inférieure à la pression de pilotage Pp.

Sur la figure 3, le sens d'augmentation du volume du compartiment de pilotage 32 correspond à un déplacement vers le haut de la partie centrale de la membrane 35, tandis que le sens de réduction du volume du compartiment de pilotage 32 correspond à un déplacement vers le bas de la partie centrale de la membrane 35.

Dans le cas de la peinture, on privilégiera la membrane, le piston ayant tendance à se « coller » aux parois des compartiments 26 et 32 lorsque la peinture a séché.

Avantageusement, le fluide de pilotage est de l'air comprimé introduit dans le compartiment de pilotage 32 par l'intermédiaire d'un tuyau flexible 36 dans lequel l'air circule depuis une pompe 38 constituant des moyens d'alimentation du dispositif 10 en fluide de pilotage. Le tuyau flexible 36 d'approvisionnement en air de pilotage est d'un diamètre extérieur de l'ordre de 4 mm.

Il est possible d'utiliser un tuyau 18 avec un faible diamètre dans la mesure où on utilise une pression Pe élevée.

Les moyens 22 de réduction de pression comprennent un compartiment intermédiaire 40 de circulation de peinture depuis le compartiment d'entrée 24 jusqu'au compartiment de sortie 26. Ce compartiment intermédiaire 40 est adjacent au compartiment d'entrée 24 et comprend une entrée 42 de peinture également appelée orifice de passage qui fait communiquer le compartiment d'entrée 24 et le compartiment intermédiaire 40, ainsi qu'un conduit 44 reliant le compartiment intermédiaire 40 et le compartiment de sortie 26.

Le clapet 30 comprend un élément obturateur 46 de l'entrée 42 du compartiment intermédiaire 40, ainsi qu'un siège 48 bordant l'entrée 42 du compartiment intermédiaire 40. L'élément obturateur 46 est mobile entre une position d'obturation complète de l'entrée 42 dans laquelle il est en contact avec le siège 48 et des positions d'ouverture de l'entrée 42 dans lesquelles il n'est plus en contact avec le siège 48, l'écartement entre l'élément obturateur 46 et le siège 48 permettant de contrôler le débit de peinture pénétrant dans le compartiment intermédiaire 40. Avantageusement, le déplacement de l'élément obturateur 46 est continu, de sorte que la quantité de peinture pénétrant dans le compartiment intermédiaire 40 est continûment modulée par le déplacement progressif de l'élément obturateur 46 entre la position d'obturation complète de l'entrée 42 et la position d'ouverture complète de l'entrée 42.

Le déplacement de l'élément obturateur 46 est commandé par le déplacement des moyens 28 d'équilibrage, une tige 50 reliant les moyens d'équilibrage à l'élément obturateur 46.

Ainsi, un déplacement des moyens d'équilibrage 28 dans le sens de réduction du volume du compartiment de sortie 26, c'est-à-dire vers le haut sur la figure 2, implique une translation de la tige 50 vers le haut, et un déplacement de l'élément obturateur 46 vers la position d'ouverture de l'entrée 42.

En sens contraire, un déplacement des moyens d'équilibrage 28 dans le sens d'augmentation du volume du compartiment de sortie 26, c'est-à-dire vers le bas sur la figure 2, implique une translation de la tige 50 vers le bas, et un déplacement de l'élément obturateur 46 vers la position d'obturation partielle voire complète de l'entrée 42.

Avantageusement, le compartiment 40 comprend une soupape de sécurité 52 se déclenchant lorsque la pression à l'intérieur du compartiment 40 dépasse un certain seuil. Cet agencement permet de garantir que la pression de sortie Ps entrant dans le pistolet 12 est inférieure à la pression maximale admissible par ledit pistolet afin de ne pas injecter dans le pistolet de la peinture à une pression supérieure à celle préconisée par le constructeur du pistolet afin de ne pas l'endommager.

Le fonctionnement du dispositif 10 qui ressort déjà de la description précédente va maintenant être décrit en détails.

Lorsqu'un opérateur souhaite recouvrir de peinture une surface de travail, il saisit le dispositif de pulvérisation 10 en forme de pistolet et déclenche l'approvisionnement du dispositif 10 en peinture par la pompe 16 haute pression, la peinture mélangée à l'air comprimé circulant dans le tuyau flexible 18.

Quand le débit en sortie augmente, la pression de sortie Ps diminue et devient inférieure à la pression de pilotage, ce qui provoque un déplacement des moyens d'équilibrage 28 vers le haut et une ouverture progressive de l'entrée 42 du compartiment intermédiaire 40. Ainsi, une quantité supplémentaire de peinture pénètre dans le compartiment de sortie 26, ce qui augmente la pression exercée par la peinture sur les moyens d'équilibrage 28, jusqu'à l'équilibre des pressions Ps et Pp. Alors, la pression Ps se stabilise à la valeur de pilotage.

Au contraire, quand le débit en sortie diminue, la pression de sortie Ps augmente jusqu'à devenir supérieure à la pression de pilotage Pp, provoquant le déplacement des moyens d'équilibrage 28 vers le bas et une fermeture progressive de l'entrée 42 du compartiment intermédiaire 40. Ainsi, l'approvisionnement du compartiment de sortie 26 en peinture est réduite, ce qui réduit la pression exercée par la peinture sur les moyens d'équilibrage 28, jusqu'à l'équilibre des pressions Ps et Pp où la pression Ps se stabilise à la valeur de pilotage.

Ainsi, toute variation de la pression de sortie Ps est automatiquement « absorbée » par le dispositif 10, le dispositif 10 assurant l'auto-régulation de la pression de sortie Ps. Cette auto-régulation permet d'obtenir une meilleure constance de pression et de limiter ainsi les risques de coulures de peintures

Contrairement à l'art antérieur qui préconise d'alimenter le pistolet fonctionnant avec une peinture à basse pression (de l'ordre de 2 bars) avec une peinture à basse pression circulant dans un conduit de grande section, l'invention propose d'alimenter le pistolet fonctionnant avec une peinture à basse pression (de l'ordre de 0,3 à 4 bars, préférentiellement de l'ordre de 0,5 bars) avec de la peinture circulant dans un conduit 18 de faible section, la peinture étant soumise à une pression importante (susceptible d'atteindre 300 bars) pour assurer un débit adéquat compte tenu de la section réduite du conduit 18 et un réducteur de pression étant prévu à l'entrée du pistolet. Pour obtenir une pression adéquate dans le conduit 18, ce dernier est alimenté en peinture par une pompe 17 dite haute pression susceptible de délivrer un mélange peinture air comprimé à une pression susceptible d'atteindre 300 bars.

Le tableau qui suit est un comparatif des caractéristiques d'un dispositif avec une pompe d'alimentation basse pression de l'art antérieur et du dispositif 10 pour une application particulière. Dans cet exemple, une pompe alimente six pistolets, donc six tuyaux flexibles 14 de 25 m chacun.

| Description | Dispositif de pulvérisation selon la présente invention | Dispositif de l'art antérieur |
|---|---|---|
| Longueur totale des tuyaux flexibles (pour 6 tuyaux) | 150 m | 150 m |
| Diamètre interne du tuyau flexible | 3.2 mm | 9.7 mm |
| Volume de peinture perdue | 1.2 L | 11.4 L |
| Poids du tuyau flexible rempli de peinture | 4.2 kg | 11.8 kg |
| Volume de solvant nécessaire au lavage | 8 L | 40 L |
| Durée de lavage | 7 min | 20 min |

Comme visible sur le tableau qui précède, le dispositif de pulvérisation 10 permet, à longueur égale du tuyau flexible 14, de réduire 3 fois le diamètre du tuyau flexible 14, ce qui permet de réduire d'environ 2,8 fois le poids de la peinture contenue dans le tuyau flexible 14 et de 5 fois le volume de solvant nécessaire au lavage du tuyau flexible 14. Incidemment, la durée de lavage est également considérablement diminuée.

Ainsi, grâce au dispositif de pulvérisation selon la présente invention, le poids du tuyau flexible que doit manipuler un opérateur est considérablement réduit, ce qui limite les risques de tendinites des épaules courantes avec l'utilisation de dispositifs de pulvérisation basse pression de l'art antérieur. De plus, le diamètre du tuyau flexible étant plus faible, la quantité de peinture perdue diminue, de même que la quantité de solvant de lavage.

Grâce aux faibles diamètres des tuyaux flexibles de peinture 14, de fluide de pilotage 36 et d'air comprimé 18 pour la pulvérisation, il est possible de solidariser les trois tuyaux 14, 16 et 18, par exemple par thermo-collage, ce qui facilite l'utilisation du dispositif 10.

L'invention concerne également une installation de pulvérisation d'un produit à base de peinture, comprenant des moyens d'alimentation de l'installation en peinture, telle qu'une pompe, ainsi qu'un dispositif de pulvérisation tel que décrit précédemment. La pompe selon l'invention est d'une architecture particulière dans la mesure où elle présente une longue course, des surfaces circulaires réduites, ainsi qu'un ajustement précis de la course du piston. Cette architecture réduit le volume de rétention et facilite le lavage.

Le dispositif de réduction de pression selon la présente invention s'adapte sur les pistolets de peinture habituels, pneumatiques ou électrostatiques, n'entraîne pas de modification de procédure d'application ni ne change la gestuelle du peintre.

Selon l'invention, la tige 50 reliant les moyens d'équilibrage 28 et l'élément obturateur 46 ne traverse pas l'entrée 42. Ainsi, contrairement à l'art antérieur où l'élément obturateur est disposé à l'opposé des moyens d'équilibrage par rapport à l'entrée 42, selon l'invention, les moyens d'équilibrage 28 et l'élément obturateur 46 sont disposés du même côté par rapport à l'entrée 42. De la sorte, la section de passage de l'entrée 42 ne se présente pas sous forme d'un anneau mais d'un disque selon l'invention. Cette configuration permet d'obtenir une surface pour la section de passage de l'entrée 42 la plus petite tout en permettant le passage des éléments solides dans la peinture telles que les charges de plus grandes dimensions.

Cette configuration permet d'optimiser la réduction de pression, en réduisant le rapport entre la surface de la section de passage de l'entrée 42 et la surface de la section des moyens d'équilibrage 28 sans augmenter la section des moyens d'équilibrage afin d'obtenir un dispositif le plus léger et le moins encombrant possible.

A titre d'exemple, il est possible de prévoir un rapport de 1/2000 avec une section au niveau de l'entrée de l'ordre de 0,19 mm² (soit un diamètre de l'ordre de 0,5 mm) et une section au niveau de la membrane de l'ordre de 415 mm² (soit un diamètre de l'ordre 23 mm). L'entrée 42 n'étant pas encombrée d'une tige assurant la liaison entre la membrane et l'élément obturateur 46, on optimise le rapport de réduction dans la mesure où, à écartement entre les parois égal, une section circulaire offre une surface plus réduite qu'une section en forme d'anneau.

Pour réduire les dimensions du dispositif de réduction de pression, la tige 50 comprend au moins un conduit 54 pour faire communiquer le compartiment intermédiaire 40 avec le compartiment de sortie 26 comme illustré sur les figures 3, 4B, 5 et 6. Ainsi, il est possible de supprimer le conduit 44 qui tend à augmenter la section du dispositif de réduction de pression.

Selon un mode de réalisation illustré sur les figures 4B, 5 et 6, la tige 50 et l'élément obturateur 46 sont réalisés d'un seul tenant et comprennent une portion cylindrique 56 apte à coulisser dans un fourreau 58 séparant les compartiments 32 et 40 avec à une première extrémité 60 des moyens pour solidariser les moyens d'équilibrage 28 de manière à ce que ladite extrémité 60 soit disposée dans le compartiment de sortie 26, et avec à l'autre extrémité une forme tronconique évasée 62 suivie d'une forme conique effilée 64 assurant la fonction d'élément obturateur 46. De préférence, au moins un conduit 54 s'étend sur toute la hauteur de la portion cylindrique 56 et débouche d'une part au niveau de l'extrémité 60 et d'autre part au niveau de la forme tronconique évasée 62. Avantageusement, on prévoit trois conduits 54 disposés à 120°.

En variante, on pourrait envisager une portion cylindrique 56 creuse débouchant au niveau de l'extrémité 60 et avec en partie inférieure des orifices permettant de faire communiquer l'intérieur de la portion cylindrique creuse 56 avec le compartiment intermédiaire 40.

## Revendications

1. Dispositif d'autorégulation et de réduction d'une pression de sortie (Ps) à partir d'une pression d'entrée (Pe), destiné à équiper un dispositif de pulvérisation de peinture, ledit dispositif d'autorégulation et de réduction comprenant des moyens d'équilibrage (28) de la pression de sortie (Ps) à une pression de pilotage (Pp) et un clapet (30) permettant de réguler et réduire la pression d'entrée (Pe) commandé par lesdits moyens d'équilibrage (28), de sorte à limiter la pression de sortie (Ps) en la maintenant sensiblement constante de façon autonome, ledit clapet (30) comportant un orifice de passage (42) plus ou moins obturé par un élément obturateur (46) relié par une tige (50) aux moyens d'équilibrage (28), **caractérisé en ce que** la tige (50) reliant les moyens d'équilibrage (28) et l'élément obturateur (46) ne traverse pas l'orifice de passage (42), lesdits moyens d'équilibrage (28) et l'élément obturateur (46) étant disposés du même côté par rapport à l'orifice de passage (42).

2. Dispositif d'autorégulation et de réduction de pression selon la revendication précédente, **caractérisé en ce qu'**il comprend un compartiment de sortie (26) de la peinture et un compartiment de pilotage (32) susceptible d'être rempli de fluide de pilotage à la pression de pilotage (Pp), les moyens d'équilibrage (28) étant apte à se déplacer dans un sens de réduction du volume du compartiment de pilotage (32) quand la pression de sortie (Ps) est supérieure à la pression de pilotage (Pp) et dans un sens d'augmentation du volume du compartiment de pilotage (32) quand la pression de sortie (Ps) est inférieure à la pression de pilotage (Pp).

3. Dispositif d'autorégulation et de réduction de pression selon l'une des revendications 1 ou 2, **caractérisé en ce qu'**il comprend un compartiment d'entrée (24) et un compartiment intermédiaire (40) de circulation de peinture depuis le compartiment d'entrée (24) jusqu'au compartiment de sortie (26), le clapet (30) étant disposés entre les compartiments intermédiaire (40) et le compartiment d'entrée (24).

4. Dispositif d'autorégulation et de réduction de pression selon l'une quelconque des revendications précédentes, **caractérisé en ce que** les moyens d'équilibrage (28) se présentent sous la forme d'une membrane (35).

5. Dispositif d'autorégulation et de réduction de pression selon la revendication 3 ou 4, **caractérisé en ce que** la tige (50) comprend au moins un conduit (54) pour faire communiquer le compartiment intermédiaire (40) avec le compartiment de sortie (26).

6. Dispositif d'autorégulation et de réduction de pression selon la revendication 5, **caractérisé en ce que** la tige (50) et l'élément obturateur (46) sont réalisés d'un seul tenant et comprennent une portion cylindrique (56) avec à une première extrémité (60) des moyens pour solidariser les moyens d'équilibrage (28) de manière à ce que ladite extrémité (60) soit disposée dans le compartiment de sortie (26), et avec à l'autre extrémité une forme tronconique évasée (62) suivie d'une forme conique effilée (64) assurant la fonction d'élément obturateur (46).

7. Dispositif de pulvérisation d'un produit à base de peinture comprenant un dispositif d'autorégulation et de réduction de pression selon l'une quelconque des revendications précédentes, ledit dispositif de pulvérisation étant muni d'une sortie (20) dudit produit à base de peinture hors du dispositif de pulvérisation (10) à une pression de sortie (Ps) et d'une entrée (12) de la peinture dans le dispositif (10) à une pression d'entrée (Pe) supérieure à la pression de sortie (Ps), ledit dispositif de pulvérisation (10) comprenant des moyens d'équilibrage (28) de la pression de sortie (Ps) à une pression de pilotage (Pp) et un clapet (30) permettant de réguler et réduire la pression d'entrée (Pe) commandé par lesdits moyens d'équilibrage (28), de sorte à limiter la pression de sortie (Ps) en la maintenant sensiblement constante de façon autonome, ledit clapet (30) comportant un orifice de passage (42) plus ou moins obturé par un élément obturateur (46) relié par une tige (50) aux moyens d'équilibrage (28), **caractérisé en ce que** la tige (50) reliant les moyens d'équilibrage (28) et l'élément obturateur (46) ne traverse pas l'orifice de passage (42), lesdits moyens d'équilibrage (28) et l'élément obturateur (46) étant disposés du même côté par rapport à l'orifice de passage (42).

8. Dispositif de pulvérisation d'un produit à base de peinture selon la revendication précédente, **caractérisé en ce que** la pression de sortie (Ps) est comprise entre 0,3 bars et 4 bars.

9. Dispositif de pulvérisation d'un produit à base de peinture selon l'une quelconque des revendications 7 ou 8, **caractérisé en ce que** la pression d'entrée (Pe) est comprise entre 30 bars et 300 bars.

10. Installation de pulvérisation d'un produit à base de peinture, comprenant des moyens d'alimentation de l'installation en peinture, **caractérisé en ce qu'**elle comprend un dispositif de pulvérisation selon l'une quelconque des revendications 7 à 9.

## Patentansprüche

1. Vorrichtung mit Selbststeuerung und mit Reduktion eines Ausgangsdrucks (Ps) ausgehend von einem Eingangsdruck (Pe), die dazu vorgesehen ist, eine Farbsprühvorrichtung auszustatten, mit Abgleichmitteln (28), um den Ausgangsdruck (Ps) an einen Steuerdruck (Pp) anzupassen, und mit einem Ventil (30), das es gestattet, den Eingangsdruck (Pe) von den Abgleichmitteln (28) gesteuert einzustellen und zu reduzieren, so dass der Ausgangsdruck (Ps) auf selbsttätige Weise begrenzt und im Wesentlichen konstant gehalten ist, wobei das Ventil (30) eine Durchtrittsöffnung (42) aufweist, die mehr oder weniger durch ein Verschlusselement (46) verschlossen ist, das über eine Stange (50) mit den Abgleichmitteln (28) verbunden ist, **dadurch gekennzeichnet, dass** die Stange (50), die die Abgleichmittel (28) und das Verschlusselement (46) verbindet, die Durchtrittsöffnung (42) nicht durchquert, und sich die Abgleichmittel (28) und das Verschlusselement (46) auf der gleichen Seite bezüglich der Durchtrittsöffnung (42) befinden.

2. Vorrichtung mit Selbststeuerung und mit Druckreduktion nach dem vorhergehenden Anspruch, **dadurch gekennzeichnet, dass** diese eine Ausgangskammer (26) der Farbe und eine Steuerkammer (32) aufweist, die dazu geeignet ist, mit einem Steuerfluid mit Steuerdruck (Pp) gefüllt zu sein, wobei die Abgleichmittel (28) dazu eingerichtet sind, sich in Richtung einer Verringerung des Volumens der Steuerkammer (32) zu bewegen, wenn der Ausgangsdruck (Ps) größer als der Steuerdruck (Pp) ist, und sich in Richtung einer Vergrößerung des Volumens der Steuerkammer (32) zu bewegen, wenn der Ausgangsdruck (Ps) kleiner als der Steuerdruck (Pp) ist.

3. Vorrichtung mit Selbststeuerung und mit Druckreduktion nach einem der Ansprüche 1 oder 2, **dadurch gekennzeichnet, dass** diese eine Eingangskammer (24) und eine Zwischenkammer (40) für den Fluss der Farbe von der Eingangskammer (24) bis zur Ausgangskammer (26) aufweist, wobei das Ventil (30) zwischen der Zwischenkammer (40) und der Eingangskammer (24) angeordnet ist.

4. Vorrichtung mit Selbststeuerung und mit Druckreduktion nach einem der vorhergehenden Ansprüche, **dadurch gekennzeichnet, dass** die Abgleichmittel (28) als Membran (35) ausgebildet sind.

5. Vorrichtung mit Selbststeuerung und mit Druckreduktion nach Anspruch 3 oder 4, **dadurch gekennzeichnet, dass** die Stange (50) wenigstens eine Leitung (54) aufweist, um die Zwischenkammer (40) mit der Ausgangskammer (26) zu verbinden.

6. Vorrichtung mit Selbststeuerung und mit Druckreduktion nach Anspruch 5, **dadurch gekennzeichnet, dass** die Stange (50) und das Verschlusselement (46) zusammenhängend ausgebildet sind und einen zylindrischen Abschnitt (56) aufweisen, der an einem ersten Ende (60) mit Mitteln versehen ist, um die Abgleichmittel (28) derart anzubringen, dass sich dieses Ende (60) in der Ausgangskammer (26) befindet, und der am anderen Ende mit einer ausgeweiteten Kegelstumpfform (62) versehen ist, die von einem spitzen Konus (64) gefolgt ist, der die Funktion des Verschlusselements (46) gewährleistet.

7. Sprühvorrichtung für ein Produkt auf Farbbasis, die eine Vorrichtung mit Selbststeuerung und Druckreduktion nach einem der vorhergehenden Ansprüche aufweist, wobei die Sprühvorrichtung mit einem Ausgang (20) für das Produkt auf Farbbasis außerhalb der Sprühvorrichtung (10) mit einem Ausgangsdruck (Ps) und mit einem Eingang (12) für die Farbe in die Vorrichtung (10) mit einem Eingangsdruck (Pe) versehen ist, der größer als der Ausgangsdruck (Ps) ist, wobei die Sprühvorrichtung (10) Abgleichmittel (28) aufweist, um einen Ausgangsdruck (Ps) an einen Steuerdruck (Pp) anzugleichen, und ein Ventil (30), das es gestattet, den Eingangsdruck (Pe) von den Abgleichmitteln (28) gesteuert einzustellen und zu reduzieren, so dass der Ausgangsdruck (Ps) auf selbsttätige Weise begrenzt und im Wesentlichen konstant gehalten ist, wobei das Ventil (30) eine Durchtrittsöffnung (42) aufweist, die mehr oder weniger durch ein Verschlusselement (46) verschlossen ist, das über eine Stange (50) mit den Abgleichmitteln (28) verbunden ist, **dadurch gekennzeichnet, dass** die Stange (50), die die Abgleichmittel (28) und das Verschlüsselement (46) verbindet, die Durchtrittsöffnung (42) nicht durchquert, und sich die Abgleichmittel (28) und das Verschlusselement (46) auf der gleichen Seite bezüglich der Durchtrittsöffnung (42) befinden.

8. Sprühvorrichtung für ein Produkt auf Farbbasis nach dem vorhergehenden Anspruch, **dadurch gekennzeichnet, dass** der Ausgangsdruck (Ps) zwischen 0,3 bar und 4 bar liegt.

9. Sprühvorrichtung für ein Produkt auf Farbbasis nach einem der Ansprüche 7 oder 8, **dadurch gekennzeichnet, dass** der Eingangsdruck (Pe) zwischen 30 bar und 300 bar liegt.

10. Einrichtung zum Besprühen eines Produkts auf Farbbasis mit Mitteln, um die Einrichtung mit Farbe zu versorgen, **dadurch gekennzeichnet, dass** diese eine Sprühvorrichtung nach einem der Ansprüche 7 bis 9 aufweist.

## Claims

1. Device for self-regulation and reduction of an outlet pressure (Ps) starting from an inlet pressure (Pe), designed to equip a paint spraying device, said self-regulation and reduction device comprising means (28) for equalizing the outlet pressure (Ps) at a pilot pressure (Pp) and a valve (30) that makes it possible to regulate and reduce the inlet pressure (Pe) controlled by said equalizing means (28), so as to limit the outlet pressure (Ps) by keeping said pressure essentially constant in an independent manner, said valve (30) comprising a passage opening (42) more or less sealed by a sealing element (46) connected by a rod (50) to the equalizing means (28), **characterized in that** the rod (50) that connects the equalizing means (28) and the sealing element (46) do not pass through the passage opening (42), said equalizing means (28) and the sealing element (46) being placed on the same side relative to the passage opening (42).

2. Pressure self-regulation and reduction device according to the preceding claim, wherein it comprises a paint outlet compartment (26) and a pilot compartment (32) that can be filled with pilot fluid at the pilot pressure (Pp), the equalizing means (28) being able to move in a direction of reducing the volume of the pilot compartment (32) when the outlet pressure (Ps) is greater than the pilot pressure (Pp) and in a direction of increasing the volume of the pilot compartment (32) when the outlet pressure (Ps) is less than the pilot pressure (Pp).

3. Pressure self-regulation and reduction device according to one of Claims 1 or 2, wherein it comprises an inlet compartment (24) and an intermediate compartment (40) for the circulation of paint from the inlet compartment (24) up to the outlet compartment (26), the valve (30) being placed between the intermediate compartments (40) and the inlet compartment (24).

4. Pressure self-regulation and reduction device according to any of the preceding claims, wherein the equalizing means (28) come in the form of a membrane (35).

5. Pressure self-regulation and reduction device according to Claim 3 or 4, wherein the rod (50) comprises at least one tube (54) for linking the intermediate compartment (40) with the outlet compartment (26).

6. Pressure self-regulation and reduction device according to Claim 5, wherein the rod (50) and the sealing element (46) are produced in a single piece and comprise a cylindrical portion (56) having, at a first end (60), means for attaching the equalizing means (28) so that said end (60) is placed in the outlet compartment (26), and having, at the other end, a tapered truncated shape (62) followed by a sharpened conical shape (64) that ensures the function of the sealing element (46).

7. Device for spraying a paint-based product that comprises a pressure self-regulation and reduction device according to any of the preceding claims, said spraying device being equipped with an outlet (20) of said paint-based product outside of the spraying device (10) at an outlet pressure (Ps) and with a paint inlet (12) in the device (10) at an inlet pressure (Pe) greater than the outlet pressure (Ps), said spraying device (10) comprising means (28) for equalizing the outlet pressure (Ps) at a pilot pressure (Pp) and a valve (30) that makes it possible to regulate and reduce the inlet pressure (Pe) controlled by said equalizing means (28) so as to limit the outlet pressure (Ps) by keeping said pressure essentially constant in an independent manner, said valve (30) comprising a passage opening (42) more or less sealed by a sealing element (46) connected by a rod (50) to the equalizing means (28), wherein the rod (50) connecting the equalizing means (28) and the sealing element (46) do not pass through the passage opening (42), said equalizing means (28) and the sealing element (46) being placed on the same side relative to the passage opening (42).

8. Device for spraying a paint-based product according to the preceding claim, wherein the outlet pressure (Ps) is between 0.3 bar and 4 bar.

9. Device for spraying a paint-based product according to any of Claims 7 or 8, wherein the inlet pressure (Pe) is between 30 bar and 300 bar.

10. Installation for spraying a paint-based product that comprises means for supplying the installation in paint, wherein it comprises a spraying device according to any of Claims 7 to 9.
